# EUROPEAN PATENT APPLICATION

(11) **EP 2 799 324 A1**
(43) Date of publication of application: **05.11.2014**
(21) Application number: 12862850.0
(22) Date of filing: 26.12.2012
(51) Int. Cl.: B62J 99/00, G08G 1/00, G10L 13/00

(54) **DRIVING SKILL INFORMATION PRESENTATION DEVICE**

(30) Priority: 26.12.2011 JP 2011283863
(71) Applicant: Yamaha Hatsudoki Kabushiki Kaisha, Iwata-shi, Shizuoka 438-8501 (JP)
(72) Inventor: DAIMOTO, Hiroshi, Iwata-shi Shizuoka 438-8501 (JP); YONETA, Keisuke, Iwata-shi Shizuoka 438-8501 (JP); YOSHIKURA, Hajime, Iwata-shi Shizuoka 438-8501 (JP)
(74) Representative: Grünecker, Kinkeldey, Stockmair & Schwanhäusser
(86) International application number: PCT/JP2012/008330
(87) International publication number: WO 2013/099246

(57) **Abstract**

A driving skill information presenting apparatus is provided, which presents information on driving skill according to the driver's spare capacity for driving. The driving skill information presenting apparatus includes a driving skill evaluator for evaluating a driver's driving skill, a spare capacity determiner for determining a spare capacity for driving by the driver based on the driving skill, a presentation information selector for selecting presentation information on the driving skill based on the spare capacity, and an information output unit for outputting the presentation information selected. Since skill information to be presented is selected according to the driver's spare capacity for driving, the driver can be presented with the skill information with an appropriate information load.

## Description

### Technical Field

This invention relates to a driving skill information presenting apparatus for presenting information on driving skills in driving vehicles.

### Background Art

Conventionally, there exist skill determining apparatus for determining the skills of drivers who drive two-wheeled vehicles or four-wheeled vehicles. In the case of a four-wheeled vehicle, the driver's skill can be determined based on steering angle. In the case of a two-wheeled vehicle, variations in the roll direction or pitch direction or caster angle are detected, in addition to variations in the yaw direction, and based on this, the driver's skill can be determined. The term "driver" includes a rider of the two-wheeled vehicle also.

### (1) Technique of Patent Document 1

A driving support apparatus for a vehicle described in Patent Document 1 can determine a skill level based on the driver's steering angles, and notify the driver of an improvement or degradation of the skill level.

### (2) Technique of Patent Document 2

A rider characteristic determining apparatus described in Patent Document 2 detects variations in the roll direction or pitch direction or in the caster angle, in addition to variations in the yaw direction. Based on these detection values, it can determine the rider's vehicle stability characteristics and turning characteristics, and display results of these determinations on a monitor.

### [Prior Art Document]

### [Patent Document]

[Patent Document 1] Unexamined Patent Publication No. 2006-232174
[Patent Document 2] International publication WO2011-077638

### Summary of Invention

### Technical Problem

With the skill determining apparatus of Patent Documents 1 and 2, information on determination results is presented regardless of the driver' spare capacity for driving during the driving. That is, regardless of whether the driver is a beginner or an experienced person, driving skill information in the same amount of information is presented through the same information presenting device. However, there are variations in the information required according to the driver's driving skill. For example, the driver who is an experienced person will require a large variety and a large amount of information. The driver who is a beginner will drive with increased concentration, and will have difficulty in understanding information even if the information is presented in a large amount, and therefore it is more desirable to present a little information.

This invention has been made having regard to the state of the art noted above, and its object is to provide a driving skill information presenting apparatus which changes presented information according to the driver's driving skill.

### Solution to Problem

To fulfill the above object, this invention provides the following construction.

A driving skill information presenting apparatus according to this invention comprises a driving skill evaluator for evaluating a driver's driving skill; a spare capacity determiner for determining the driver's spare capacity for driving based on the driving skill; a presentation information selector for selecting presentation information on the driving skill based on the spare capacity; and an information output unit for outputting the presentation information selected.

According to the driving skill information presenting apparatus of this invention, the driving skill evaluator evaluates the driver's driving skill. Based on the driving skill evaluated, the spare capacity determiner determines a spare capacity indicating how much composure the driver has in driving. Based on the spare capacity determined, the presentation information selector selects information on the driving skill to be presented to the driver. The selected skill information is outputted from the information output unit. Since the skill information to be presented is selected according to the driver's spare capacity for driving, the driver can be presented with the skill information with an appropriate information load. Presented with skill information suited to his or her own driving skill, the driver can enjoy driving the vehicle at ease without feeling stress in acquiring the skill information.

It is preferred that the spare capacity determiner determines the spare capacity stepwise according to the driving skill. With the spare capacity determiner determining the spare capacity stepwise according to the driver's driving skill, skill information can be presented with increased appropriateness according to each level of the stepwise determination. The driver, with the presented skill information variable according to the driver's own spare capacity level, can enjoy driving the vehicle at ease. Since his or her own skill level can be recognized, the driver can drive the vehicle in a way appropriate to his or her skill level.

It is preferred that the presentation information selector includes an output device selecting unit for selecting one of visual information and nonvisual information as the presentation information according to the spare capacity. The output device selecting unit selects visual information or nonvisual information as the presentation information according to the spare capacity. Consequently, the driver can obtain visual information or nonvisual information according to his or her own spare capacity, thereby to obtain an appropriate information load.

It is preferred that the presentation information selector includes a presentation area selecting unit for selecting presentation areas for the visual information according to the spare capacity. Since the presentation area selecting unit selects presentation areas for the visual information according to the spare capacity, the driver can obtain visual information in the presentation areas according to his or her own spare capacity, and this facilitates acquisition of skill information.

It is preferred that the nonvisual information is one of sound information and vibration information. Since the nonvisual information is sound information or vibration information, the driver's information load is lightened to allow the driver to enjoy driving at ease.

It is preferred that the presentation information selector includes a presentation information amount selecting unit for selecting an information amount of the presentation information according to the spare capacity. Since the presentation information amount selecting unit selects an information amount of the presentation information according to the spare capacity, the driver, with the amount of information varied according to his or her own spare capacity, can obtain an appropriate information load.

### Advantageous Effects of Invention

This invention can provide a driving skill information presenting apparatus which changes presented information according to the driver's driving skill.

### Brief Description of Drawings

Figure 1 is a side view showing an outline construction of a two-wheeled motor vehicle according to an embodiment;
Figure 2 is a functional block diagram showing a construction of a driving skill information presenting apparatus according to the embodiment;
Figure 3 is an explanatory view showing spare capacity determination according to the embodiment;
Figure 4 is an explanatory view showing spare capacity determination according to the embodiment;
Figure 5 is a flow chart showing a procedure of information presentation according to the embodiment;
Figure 6 is an explanatory view showing visual information presented according to the embodiment;
Figure 7 is an explanatory view showing visual information presented according to the embodiment;
Figure 8 is an explanatory view showing a staged presentation of skill information by nonvisual information according to the embodiment;
Figure 9 is a flow chart showing a procedure of information presentation according to the embodiment;
Figure 10 is a flow chart showing a procedure of information presentation according to the embodiment;
Figure 11 is a flow chart showing a procedure of information presentation according to the embodiment;
Figure 12 is an explanatory view showing visual information presented according to the embodiment;
Figure 13 is an explanatory view showing visual information presented according to the embodiment; and
Figure 14 is an explanatory view showing visual information presented according to the embodiment;

### Description of Embodiments

An embodiment of this invention will be described hereinafter with reference to the drawings. Here, a two-wheeled motor vehicle will be described as an example of vehicle according to the embodiment. In the following description, front and rear and right and left are based on a traveling direction of the two-wheeled motor vehicle.

### 1. Outline construction of two-wheeled motor vehicle

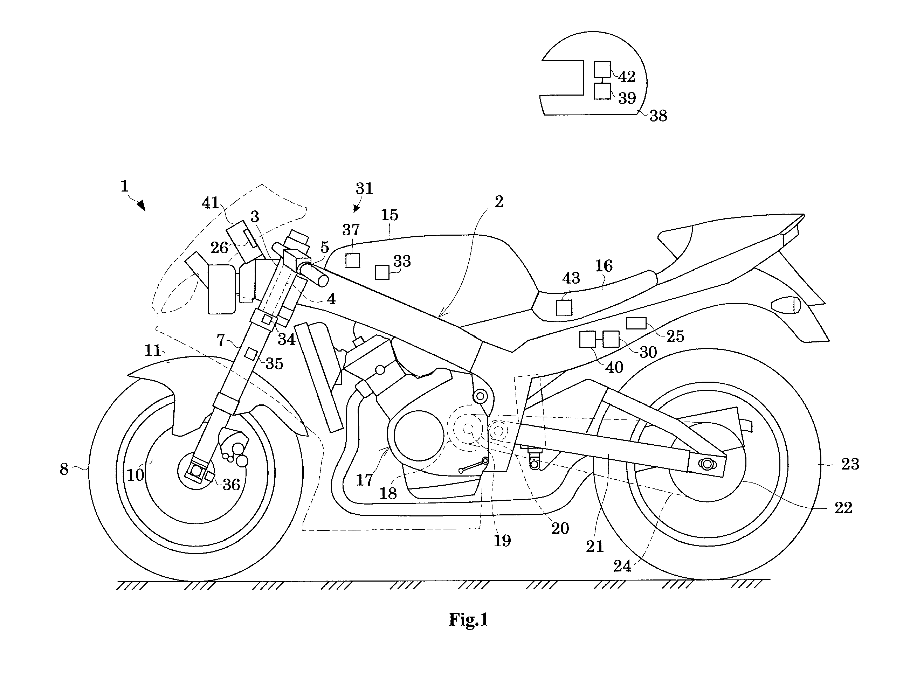

Fig. 1 is a side view showing an outline construction of a two-wheeled motor vehicle having a driving skill information presenting apparatus according to this embodiment. The two-wheeled motor vehicle 1 has a main frame 2. A head tube 3 is provided at an upper front end of the main frame 2. A steering shaft 4 is inserted in the head tube 3. A handlebar 5 is connected to the upper end of the steering shaft 4. A brake lever (not shown) is disposed on a right-hand side of the handlebar 5.

A pair of extendible and contractible front forks 7 are connected to the lower end of the steering shaft 4. Thus, the front forks 7 are swingable by turning operation of the handlebar 5. A front wheel 8 is rotatably attached to lower ends of the front forks 7. Vibration of the front wheel 8 is absorbed by expansion and contraction of the front forks 7. Brakes 10 are attached to the lower ends of the front forks 7 for braking rotation of the front wheel 8 by operation of the brake lever. A front wheel cover 11 is fixed to the front forks 7 above the front wheel 8.

A fuel tank 15 and a seat 16 are supported as arranged fore and aft on an upper portion of the main frame 2. An engine 17 and a speed changer 18 are held by the main frame 2 in a position below the fuel tank 15. The speed changer 18 has a drive shaft 19 for outputting power generated by the engine 17. A drive sprocket 20 is connected to the drive shaft 19.

A swing arm 21 is swingably supported by a lower rearward portion of the main frame 2. A driven sprocket 22 and a rear wheel 23 are rotatably supported by a rear end portion of the swing arm 21. A chain 24 is provided to extend between the drive sprocket 20 and the driven sprocket 22. The power generated by the engine 17 is transmitted to the rear wheel 23 through the speed changer 18, drive shaft 19, drive sprocket 20, chain 24, and driven sprocket 22. An ECU (Electronic Control Unit) 25 is provided below the seat 16 for controlling operation of various components of the two-wheeled motor vehicle 1.

The two-wheeled motor vehicle 1 has a state amount detector 31 for detecting traveling states of the vehicle. The state amount detector 31 includes a gyroscope 33, a steering angle sensor 34, a stroke sensor 35, a wheel speed sensor 36 provided for the front wheel 8, and a GPS (Global Positioning System) 37 for measuring a position of the two-wheeled motor vehicle 1.

The gyroscope 33 is mounted on the fuel tank 15. The gyroscope 33 detects angular speeds and angles in triaxial directions of yaw, roll and pitch of the two-wheeled motor vehicle 1. That is, it detects a yaw rate, a yaw angle, a roll rate, a roll angle, a pitch rate and a pitch angle of the two-wheeled motor vehicle 1. The steering angle sensor 34 is provided at the upper end of the front forks 7 for detecting a steering angle which is a rotation angle of the steering shaft 4.

The stroke sensor 35 is provided on the front forks 7 for detecting amounts of expansion and contraction of the front forks 7. Further, it calculates caster angles of the front forks 7 based on these amounts of expansion and contraction. When the front forks 7 are expanded and contracted by a hydraulic suspension, the stroke sensor 7 may calculate the caster angles by detecting a hydraulic pressure of the suspension. The wheel speed sensor 36 detects rotating speeds of the front wheel 8. Further, it calculates vehicle speeds of the two-wheeled motor vehicle 1 based on these rotating speeds. The GPS 37 is disposed forward of the fuel tank 15, and detects position information of the two-wheeled motor vehicle 1.

When the driver steers the handlebar 5 of the two-wheeled motor vehicle 1 in going around a curve, the yaw angle, yaw rate and steering angle of the two-wheeled motor vehicle 1 will change. When the driver leans the vehicle body of the two-wheeled motor vehicle 1 toward the center of the curve, the roll angle and roll rate of the two-wheeled motor vehicle 1 will change. When the driver operates the brake lever to slow down the two-wheeled motor vehicle 1 before entering the curve or during curve running, the front forks 7 will contract. This contraction of the front forks 7 will change the pitch angle, pitch rate and caster angle of the two-wheeled motor vehicle 1.

These yaw angle, yaw rate, roll angle, roll rate, pitch angle, pitch rate, caster angle, steering angle, vehicle speed and position information of the two-wheeled motor vehicle 1 are called vehicle state amounts.

The two-wheeled motor vehicle 1 further includes a monitor 41 for displaying road information and evaluation results of driving skill, a radio transceiver 40 for communicating information between the two-wheeled motor vehicle 1 and a helmet, and a vibrator 43 for communicating the evaluation results of driving skill by vibration. The monitor 41 is installed forward of the handlebar 5. The vibrator 43 is embedded in the seat 16. An input unit 26 having buttons for enabling key input is disposed adjacent the monitor 41. The driver can switch image information displayed on the monitor 41 from the input unit 26.

The helmet 38 worn by the driver has a radio transceiver 39 for communicating information between the two-wheeled motor vehicle 1 and the helmet 39, and a speaker 42 for outputting sound information communicated by radio. The two-wheeled motor vehicle 1 may have a mobile terminal such as a smartphone installed in place of the monitor 41, and a headphone in place of the speaker 42. The information communication from the two-wheeled motor vehicle 1 to the smartphone is outputted from the radio transceiver 40.

### 2. Construction of driving skill information presenting apparatus

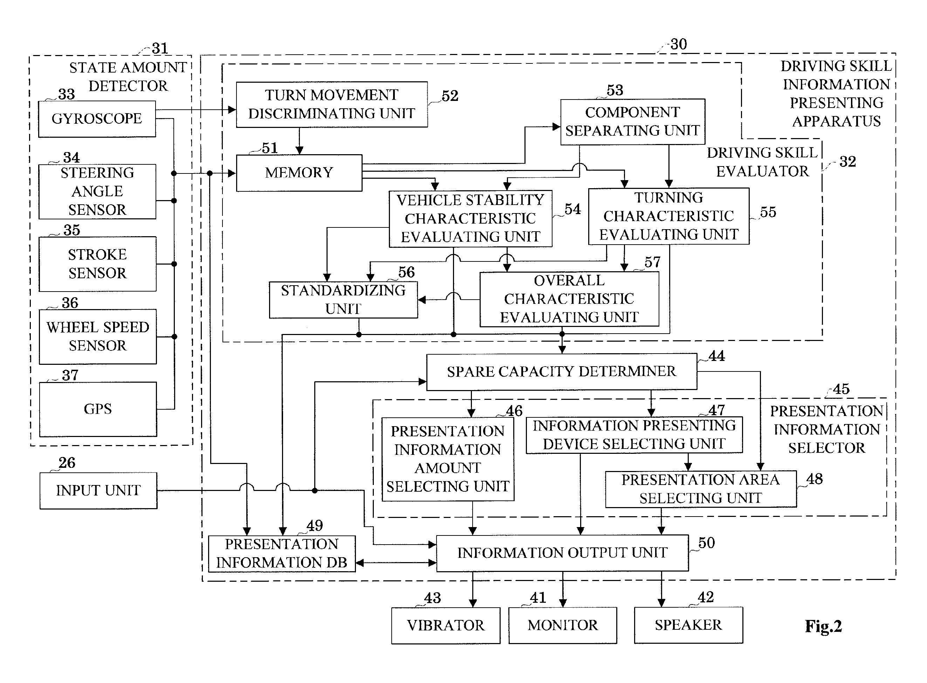

Next, the construction of driving skill information presenting apparatus 30 will be described with reference to Figs. 1 and 2. Fig. 2 is a functional block diagram showing the construction of the driving skill information presenting apparatus. The driving skill information presenting apparatus 30 is formed of a CPU and memory, and may be installed as part of ECU 25. The driving skill information presenting apparatus 30 includes a driving skill evaluator 32, a spare capacity determiner 44, a presentation information selector 45, a presentation information database 49 and an information output unit 50.

The driving skill evaluator 32 evaluates the driving skill of the driver. The driving skill evaluator 32 includes a memory 51, a turning movement discriminating unit 52, a component separating unit 53, a vehicle stability characteristic evaluating unit 54, a turning characteristic evaluating unit 55, a standardizing unit 56 and an overall characteristic evaluating unit 57. The gyroscope 33, steering angle sensor 34, stroke sensor 35, wheel speed sensor 36 and GPS 37 are connected to inputs of the driving skill evaluator unit 32. Each vehicle state amount detected by the state amount detector 31 is inputted to the driving skill evaluator 32, and is stored in time series in the memory 51.

### 3.1 Turning movement discrimination

The turning movement discriminating unit 52 discriminates whether the two-wheeled motor vehicle 1 has carried out a turning movement, which is taken into account in determining the driver's skill evaluation. Here, a criterion for determining a turning movement will be described taking for example a case where the yaw rate of the two-wheeled motor vehicle 1 has at least a certain fixed value, and this continues for at least a certain fixed time. When the above conditions are not met, the turning movement discriminating unit 52 does not determine that the two-wheeled motor vehicle 1 has carried out a turning movement.

The turning movement discriminating unit 52 discriminates a turning movement section Y from absolute values of the detection values of the yaw rate inputted from the gyroscope 33. That is, if a section is from a point of time when the absolute values of detection values of the yaw rate of the two-wheeled motor vehicle 1 exceed a threshold Xₜ to a point of time when they fall below the threshold Xₜ again, and if a duration of this section is at least a minimum duration Yₘᵢₙ, the turning movement discriminating unit 52 will discriminate this section to be a turning movement section Y. When the section from the point of time when the detection values of the yaw rate of the two-wheeled motor vehicle 1 exceed the threshold Xₜ to the point of time when they fall below the threshold Xₜ again is less than the minimum duration Yₘᵢₙ, the turning movement discriminating unit 52 will not discriminate this section to be a turning movement section. The value of threshold Xₜ may be set as appropriate according to the type of the two-wheeled motor vehicle 1. Although the above is a method of discriminating the turning movement section Y using the yaw rate, the turning movement section Y may be discriminated using other methods.

When the turning movement discriminating unit 52 discriminates the turning movement section Y, the detection value of each vehicle state amount stored in the memory 51 during the turning movement section Y is sent to the component separating unit 53. The component separating unit 53 is formed of a lowpass filter and a bandpass filter. Each detection value inputted to the component separating unit 53 is put to filtering by the lowpass filter and bandpass filter. The vehicle state amounts whose components are separable by the component separating unit 53 include yaw rate, yaw angle, roll rate, roll angle, pitch rate, pitch angle, steering angle, and caster angle. The component separation by filtering will be described taking the roll rate for example.

Entire frequency band data of the roll rate inputted to the component separating unit 53 is subjected to filtering by the lowpass filter and bandpass filter. The lowpass filter removes high-frequency components higher than a threshold frequency Fc1 which is a value set beforehand. Consequently, low-frequency components are outputted from the lowpass filter. The bandpass filter removes low-frequency components equal to or lower than the threshold frequency Fc1, and removes noise components equal to or higher than a threshold frequency Fc2. Consequently, high-frequency band components 73 are outputted from the bandpass filter 66. Since frequency components equal to or higher than the threshold frequency Fc2 are noise components, they are irrelevant to the driver's characteristic determination.

As a result of the time series data of each detection value stored in the memory 51 put to the filtering by the lowpass filter and bandpass filter, each detection value is separated into low-frequency band components and high-frequency band components. The threshold frequency Fc1 may be set according to the characteristics to determine. When determining the driver's characteristics, for example, the threshold frequency Fc1 may be set so that the difference between beginner and experienced person may be a maximum. However, the threshold frequency Fc2 must certainly be a larger value than the threshold frequency Fc1.

### 3.2 Vehicle stability characteristic determination

The vehicle stability characteristic evaluating unit 54 receives each detection value in the turning movement section Y of the two-wheeled motor vehicle 1 filtered by the lowpass filter 65 and bandpass filter 66. Here, the yaw rate, roll rate and pitch rate are inputted by way of example.

The low-frequency band of each rate separated by the threshold frequency Fc1 is interpreted as prediction components for the driver making a turn around a curve. The high-frequency band is interpreted as adjustment components adjusted when the driver turned around a curve. Next, for each of the yaw rate, roll rate and pitch rate, average values of integral values per unit time of the prediction components and adjustment components of each rate in the turning section Y are calculated. Values obtained by dividing the values derived corresponding to the respective prediction components by values corresponding to the adjustment components are regarded as stability indexes (S_{yaw}, Sᵣₒₗₗ, S_{pitch}) of the yaw rate, roll rate and pitch rate in one turning section Y.

When the driver performs smooth handlebar control relative to a curve, an integral quantity of absolute values of the low-frequency band becomes large, and an integral quantity of absolute values of the high-frequency band becomes small. When the driver carries out fine control of the handlebar 5 for adjustment during curve running, the integral quantity of absolute values of the high-frequency band will become large, and the integral quantity of absolute values of the low-frequency band will become that much smaller. Thus, by using as an index the ratio between the integral quantity of absolute values of the low-frequency band and the integral quantity of absolute values of the high-frequency band, the driver's characteristics during curve running can be expressed by scores.

Thus, the vehicle stability indexes of the two-wheeled motor vehicle 1 can be calculated by obtaining ratios between the integral quantity of absolute values of the low-frequency band and the high-frequency band of the yaw rate, roll rate and pitch rate during turning movement of the two-wheeled motor vehicle 1. Further, a vehicle stability score Sᵥ which is a weighted linear sum of the above-mentioned three stability indexes (S_{yaw}, Sᵣₒₗₗ, S_{pitch}) is calculated. The vehicle stability score Sᵥ calculated is outputted to the spare capacity determiner 44, presentation information database 49, standardizing unit 56 and overall characteristic evaluating unit 57.

### 3.3 Turning characteristic determination

The turning characteristic evaluating unit 55 receives each detection value in the turning movement section Y of the two-wheeled motor vehicle 1 filtered by the lowpass filter. Here, the steering angle, roll angle, and pitch angle or caster angle are inputted by way of example. Vehicle speeds in the turning movement section Y of the two-wheeled motor vehicle 1 are inputted from the memory 51 to the turning characteristic evaluating unit 55.

The low-frequency band of each angle is interpreted as prediction components of the driver turning the curve. When the driver performs smooth handlebar control relative to the curve, the quantity of absolute values of the low-frequency band is large. Different values for various types of angle may be used as the threshold frequency Fc1 used in the frequency separation of each rate. An average value of integral values per unit time of the prediction components in the turning section Y is calculated for each angle of the steering angle, roll angle, and pitch or caster angle. The calculated values are regarded as turning performance indexes Tₛₜₑₑᵣ, Tᵣₒₗₗ, T_{pitch(caster)} of the steering angle, roll angle, and pitch or caster angle.

An average vehicle speed T_{speed} in the turning section Y is calculated from the inputted vehicle speeds of the turning section Y. A weighted linear sum of these three turning performance indexes and the average vehicle speed is calculated as a turning performance score Tᵥ. The turning performance score Tᵥ is outputted to the spare capacity determiner 44, presentation information database 49, standardizing unit 56 and overall characteristic evaluating unit 57.

### 3.4 Overall characteristic determination

The overall characteristic evaluating unit 57 obtains the driver's overall characteristic score G for the turning section Y by calculating a weighted linear sum of vehicle stability score Sᵥ and turning performance score Tᵥ. The overall characteristic score G comprehensively evaluates the driver's characteristics based on the driver's vehicle stability characteristic and turning characteristic.

With the above, the driver's driving skill can be evaluated from the three indexes of overall characteristic score G, vehicle stability score Sᵥ and turning performance score Tᵥ. Since the respective scores are continuous values, the driver's vehicle stability, turning performance and overall characteristics can be evaluated steplessly by the respective scores. Apart from using the calculated respective scores as they are for evaluation, the driver's driving skill can be evaluated by a score standardizing each score.

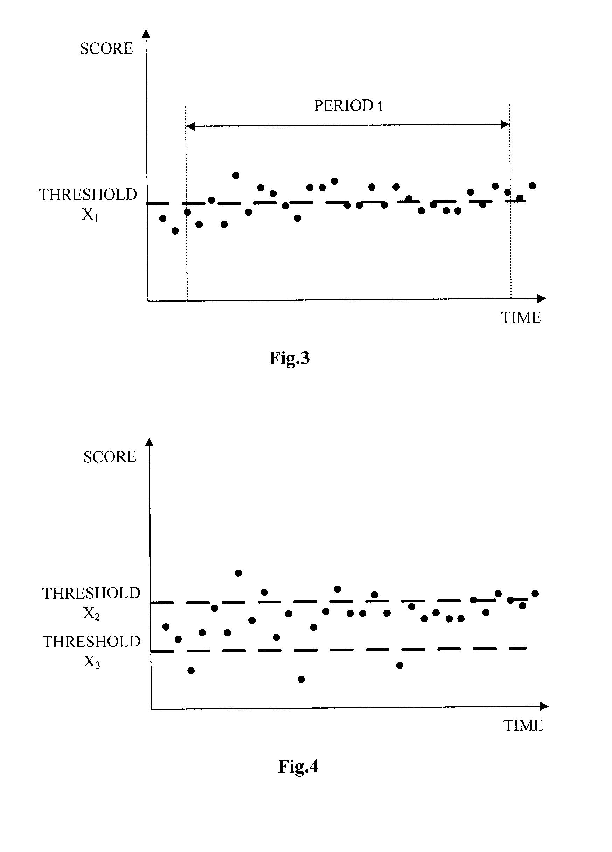

The standardizing unit 56 calculates each average score for every fixed period based on each of the overall characteristic score G, vehicle stability score Sᵥ and turning performance score Tᵥ. Fig. 3 is a graph plotting in time series certain scores calculated for each turning section Y. An average score may be calculated for each given period t based on a plurality of calculated scores, and an average score may be calculated for a certain number of turning sections. Apart from average scores, standard deviations may be calculated for evaluation. Each standardized score is sent to the spare capacity determiner 44 and presentation information database 49.

### 4. Spare capacity determination

Next, the driver's spare capacity for driving is determined based on each score which evaluates a driving characteristic. Depending on this spare capacity determined, a device for presenting skill information of the driver and an amount of information are selected appropriately. The spare capacity determiner 44 may determine the spare capacity only with reference to the overall characteristic score G or the vehicle stability score Sᵥ, or may determine the spare capacity based on at least two scores among the overall characteristic score G, vehicle stability score Sᵥ and turning performance score Tᵥ. A case of determining the spare capacity based on the overall characteristic score G will be described by way of example.

The spare capacity determiner 44 determines the driver's spare capacity for driving based on the overall characteristic score G. That is, as shown in Fig. 3, based on a predetermined threshold value X₁ for the overall characteristic score G, a spare capacity is determined into two levels, ie "high" or "low". Alternatively, as shown in Fig. 4, based on two predetermined threshold values X₂ and X₃, a spare capacity may be determined into three levels of "high", "medium" and "low". The overall characteristic score G may be a score sent from the overall characteristic evaluating unit 57, or a standardized score sent from the standardizing unit 56. A determination result of the spare capacity is outputted to the presentation information selector 45.

The presentation information selector 45 includes a presentation information amount selecting unit 46, an information presenting device selecting unit 47 and a presentation area selecting unit 48. In response to the determination result of the spare capacity, the presentation information selector 45 selects an information device for presentation to the driver and an amount of information.

The presentation information amount selecting unit 46 selects an amount of information presented according to the determination result of the spare capacity. When, for example, the determination result of the spare capacity is "high" of the two-level evaluation, information relating to the overall characteristic score G, vehicle stability score Sᵥ and turning performance score Tᵥ is selected. When the determination result of the spare capacity is "low" of the two-level evaluation, only information relating to the overall characteristic score G is selected.

The information presenting device selecting unit 47 selects a presenting means, ie a presenting device, of skill information according to the determination result of the spare capacity. In this embodiment, the monitor 41, speaker 42 and vibrator 43 are installed as information presenting devices. When the determination result of the spare capacity is "high" of the two-level evaluation, visual information is selected as presenting means, and the monitor 41 is selected as visual information presenting device. When the determination result of the spare capacity is "low" of the two-level evaluation, nonvisual information is selected as presenting means, and either the speaker 42 or the vibrator 43 is selected as nonvisual information presenting device.

When the presentation of visual information is selected by the information presenting device selecting unit 47, the presentation area selecting unit 48 will select areas for displaying skill information according to the determination result of the spare capacity. The display areas may be selected according to the determination result of the spare capacity, an enlarged display may be made to display a score of an arbitrary rate, or an auto scale change may be made centering on the center of gravity of the score displayed.

The presentation information database 49 is formed of a memory storing all information that can be presented to the driver. In addition to each vehicle state amount detected by the state amount detector 31, each score evaluated for every turning section Y by the driving skill evaluator 32 is also stored. Sound information which is nonvisual information is also stored. The presentation information database 49 and memory 51 may be integrated.

The information output unit 50 fetches, from the presentation information database, skill information applicable to the amount of presentation information selected by the presentation information amount selecting unit 46, and outputs the fetched skill information so that it can be presented from the information presenting device selected by the information presenting device selecting unit 47. That is, the information output unit 50 will, in the amount of presentation information selected by the presentation information amount selecting unit 46, output image information when the monitor 41 is selected by the information presenting device selecting unit 47, output sound information when the speaker 42 is selected, and output vibration information when the vibrator 43 is selected.

### 4.1 Spare capacity determination by overall characteristic evaluation

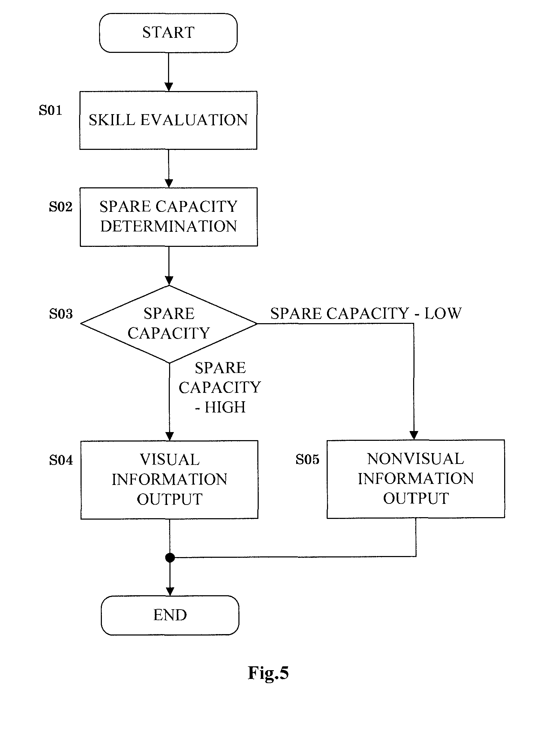

Next, an operation to present information with the overall characteristic evaluation serving as a reference for spare capacity determination in the embodiment will be described with reference to Fig. 5. Fig. 5 is a flow chart showing a procedure of information presentation.

Various vehicle state amounts are inputted from the state amount detector 31 to the driving skill information presenting apparatus 30. Based on the inputted vehicle state amounts, the vehicle stability characteristic evaluating unit 54 calculates the vehicle stability score Sᵥ, and the turning characteristic evaluating unit 55 calculates the turning performance score Tᵥ. The overall characteristic evaluating unit 57 calculates the overall characteristic score G based on the vehicle stability score Sᵥ and turning performance score Tᵥ. By calculating these various scores, the driver's skill evaluation for vehicle driving can be made (step S01). The calculated overall characteristic score G is outputted to the spare capacity determiner 44.

In response to the inputted overall characteristic score G, the spare capacity determiner 44 determines whether the spare capacity is high or low with reference to the predetermined threshold value X₁ (step S02). When the spare capacity is determined high (step S03), the information presenting device selecting unit 47, based on the determination result, instructs the information output unit 50 to output visual information (step S04). The presentation information amount selecting unit 46 instructs the information output unit 50 on the amount of information to be presented when the spare capacity is determined high.

When the spare capacity is determined low (step S03), the information presenting device selecting unit 47, based on the determination result, instructs the information output unit 50 to output nonvisual information (step S05). The presentation information amount selecting unit 46 instructs the information output unit 50 on the amount of information to be presented when the spare capacity is determined low.

The information output unit 50 acquires from the presentation information database 49 the amount of information instructed by the presentation information amount selecting unit 46. And when instructed by the information presenting device selecting unit 47 to output visual information, the information output unit 50 outputs the acquired amount of image information to the monitor 41. When instructed by the information presenting device selecting unit 47 to output nonvisual information, the information output unit 50 outputs the acquired amount of sound information to the speaker 42, or outputs the acquired amount of vibration information to the vibrator 43.

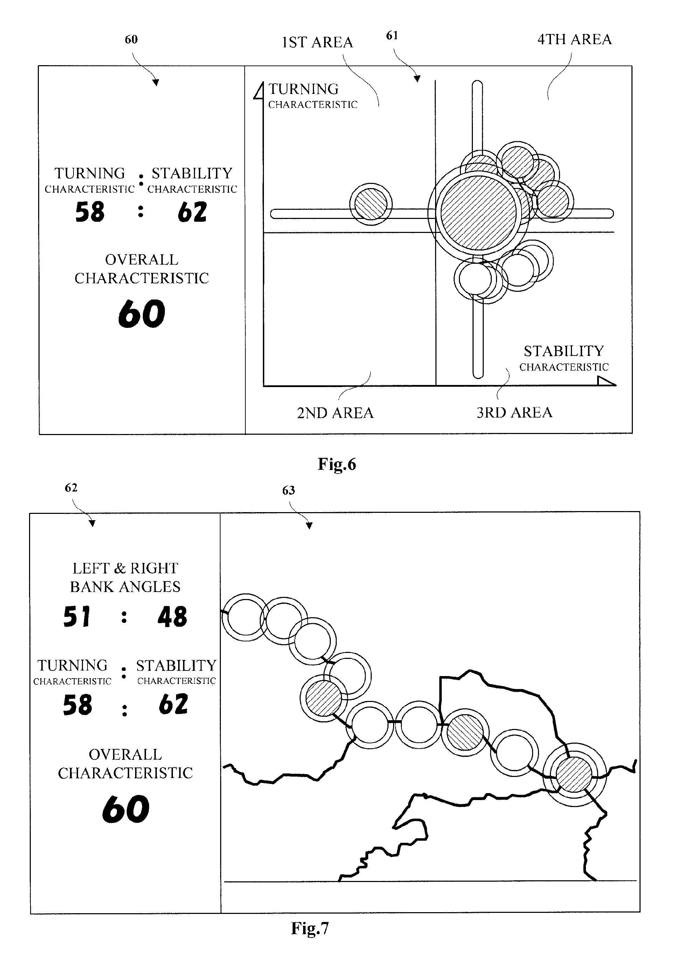

An example of image information presented by the monitor 41 is shown in Fig. 6. As shown in Fig. 6, the monitor 41 presents character information 60 and graphic information 61 relating to driving skill. The character information 60 shown in Fig. 6 indicates turning performance score Tᵥ, vehicle stability score Sᵥ and overall characteristic score G. Each score presented may be a score for each turning section Y, or may be a standardized score for a fixed period t.

The graphic information 61 graphically displays the turning performance score Tᵥ and vehicle stability score Sᵥ. The display area for displaying the turning performance score Tᵥ and vehicle stability score Sᵥ is divided into four, ie a first to a fourth, areas. The first area is an area where the turning performance score Tᵥ is high and the vehicle stability score Sᵥ is low. The second area is an area where the turning performance score Tᵥ and vehicle stability score Sᵥ are both low. The third area is an area where the turning performance score Tᵥ is low and the vehicle stability score Sᵥ is high. The fourth area is an area where the turning performance score Tᵥ and vehicle stability score Sᵥ are both high. The first to fourth areas are classified by color. The turning performance score Tᵥ and vehicle stability score Sᵥ calculated for every turning section Y are plotted in a corresponding area as one circle. The standardized turning performance score Tᵥ and vehicle stability score Sᵥ are plotted as larger circles than the circles plotted as raw scores. The circles plotted in each of the first to fourth areas are displayed in a color similar to the applicable area. That is, each circle indicating a score is classified by a color of the area to which it belongs.

Fig. 7 shows another example of image information presented on the monitor 41. The character information 62 shown in Fig. 7 displays, in addition to the turning performance score Tᵥ, vehicle stability score Sᵥ and overall characteristic score G, right and left maximum bank angles as numerical values indicating vehicle behavior. The graphic information 63, using the information from the GPS 37, and on a road map on which the two-wheeled motor vehicle 1 has traveled, and with the turning sections Y correlated to the road map, displays evaluations of the vehicle stability score Sᵥ and turning performance score Tᵥ calculated for the applicable turning sections Y. Each circle displayed in the graph information 62 is classified by color as in the graphic information 61. Switching of the character information 60, 62 and the graphic information 61, 63 can be made from the input unit 26. When the driver inputs an instruction for switching to the input unit 26, a switching instruction will be made from the input unit 26 to the information output unit 50.

Other image information presented may be skill evaluation results, vehicle behavior, maps and control information, for example. Other vehicle behavior presented may be bank angles, traveling speeds and suspension strokes, for example. Other control information presented may be throttle openings, steering angles, braking amounts and brake timing, for example. Each of these values may be presented as character information or graphic information. These pieces of information are inputted to the presentation information database.

Next, an example of sound information presented from the speaker 42 will be described. The sound information presented from the speaker 42 may be human voice information or may be sound information like signal sound. When outputting in voice information, whenever each score is calculated, its result is outputted in a voice. When carrying out a voice output of the overall characteristic score G, the output is made from the speaker 42 like "Your overall characteristic score G is 40 points." The information output unit 50 outputs voice information corresponding to the overall characteristic score G taken from the presentation information database.

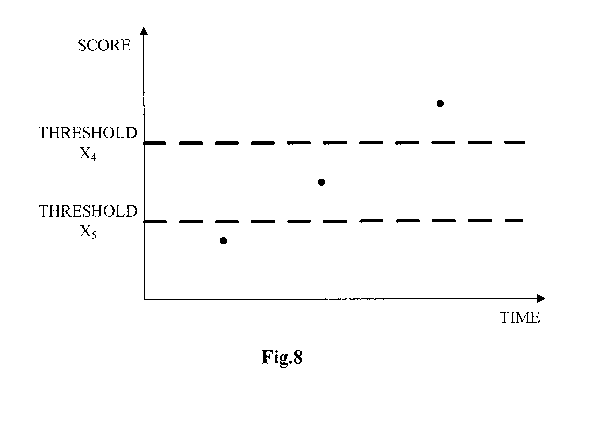

When presenting sound information like signal sound from the speaker 42, each score is evaluated into levels and its level is presented in sound information. As in the determination of the spare capacity, each score is determined using threshold values for evaluating it into levels. As shown in Fig. 8, based on predetermined threshold values X₄ and X₅, each score is evaluated into three levels of "high", "medium" and "low". When the score is determined "low" which is equal to or less than the threshold value X₅, one sound "pip" is presented. When the score is larger than the threshold value X₅ and smaller than the threshold value X₄, two sounds "pip, pip" are presented. When the score is larger than the threshold value X₅, three sounds "pip, pip, pip" are presented. These pieces of sound information are determined by the information output unit 50, and corresponding sound information is taken out of the presentation information database, and is outputted to the speaker 42.

Next, an example of vibration information presented from the vibrator 43 will be described. With the vibration information presented from the vibrator 43, whenever each score is calculated, its result is evaluated into levels using threshold values as with the sound information and the level is presented in vibration information. That is, based on the predetermined threshold values X₄ and X₅, each score is evaluated into three levels of "high", "medium" and "low" (Fig. 8). When the score is determined "low" which is equal to or less than the threshold value X₅, vibration is presented once like "bzzz". When the score is larger than the threshold value X₅ and smaller than the threshold value X₄, vibration is presented twice like "bzzz, bzzz". When the score is larger than the threshold value X₅, vibration is presented three times like "bzzz, bzzz, bzzz". These pieces of vibration information are determined by the information output unit 50 and outputted to the vibrator 43. As the vibrator 43, it is preferred to use what is included in one of the handlebar 5, a glove, seat 16, helmet 38, clothes worn by the driver, a cellular phone and a smart phone.

### 4.2 Spare capacity determination by vehicle stability characteristic evaluation

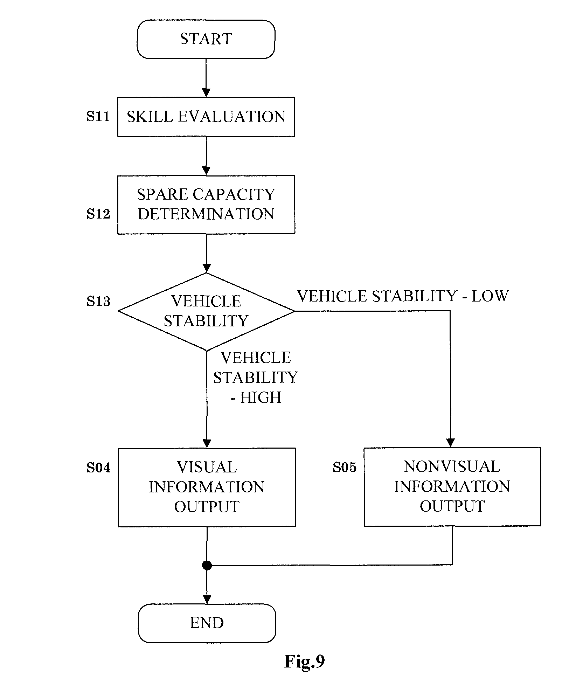

The spare capacity is determined using the overall characteristic score G in 4.1, but the spare capacity may be determined using the vehicle stability score Sᵥ. Fig. 9 is a flow chart showing a procedure of information presentation by the vehicle stability score Sᵥ.

Various vehicle state amounts are inputted from the state amount detector 31 to the driving skill information presenting apparatus 30. Based on the inputted vehicle state amounts, the vehicle stability characteristic evaluating unit 54 calculates the vehicle stability score Sᵥ. By calculating the vehicle stability score Sᵥ, the driver's skill evaluation for vehicle driving can be made (step S 11). The calculated vehicle stability score Sᵥ is outputted to the spare capacity determiner 44.

In response to the inputted vehicle stability score Sᵥ, the spare capacity determiner 44 determines whether the spare capacity is high or low with reference to a predetermined threshold value (step S12). When the spare capacity is determined high (step S 13), the information presenting device selecting unit 47, based on the determination result, instructs the information output unit 50 to output visual information (step S04). The presentation information amount selecting unit 46 instructs the information output unit 50 on the amount of information to be presented when the spare capacity is determined high.

When the spare capacity is determined low (step S13), the information presenting device selecting unit 47, based on the determination result, instructs the information output unit 50 to output nonvisual information (step S05). The presentation information amount selecting unit 46 instructs the information output unit 50 on the amount of information to be presented when the spare capacity is determined low.

As described above, also when the spare capacity is determined using only the vehicle stability score Sᵥ, the amount of information presented to the driver and the information device can be selected appropriately. Since the spare capacity is determined using only the vehicle stability score Sᵥ, information presentation can be selected easily.

### 4.3 Spare capacity determination by vehicle stability characteristic evaluation and turning characteristic evaluation

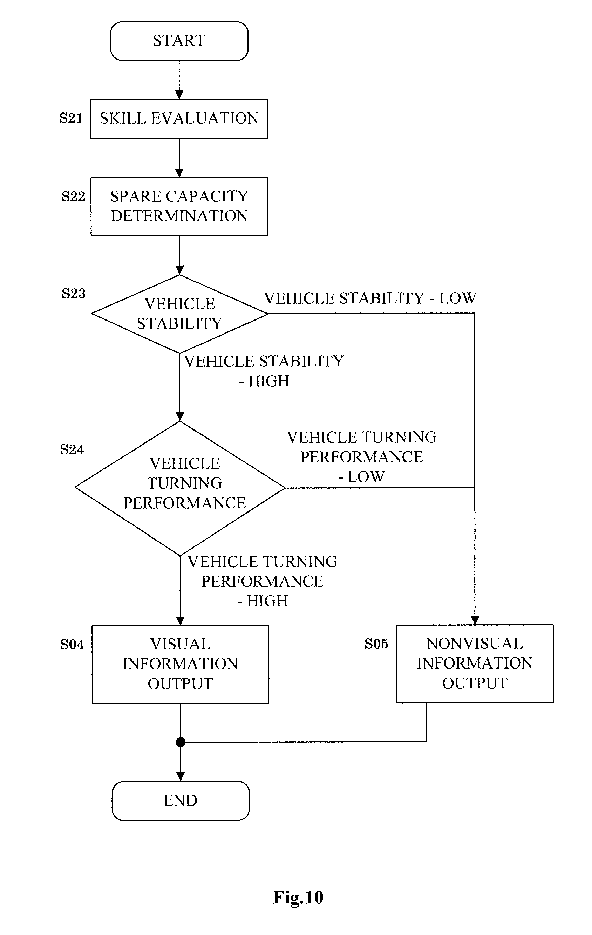

The spare capacity is determined using the overall characteristic score G in 4.1, but the spare capacity may be determined using the vehicle stability score Sᵥ and turning performance score Tᵥ. Fig. 10 is a flow chart showing a procedure of information presentation by the vehicle stability score Sᵥ and turning performance score Tᵥ.

Various vehicle state amounts are inputted from the state amount detector 31 to the driving skill information presenting apparatus 30. Based on the inputted vehicle state amounts, the vehicle stability characteristic evaluating unit 54 calculates the vehicle stability score Sᵥ, and the turning characteristic evaluating unit 55 calculates the turning performance score Tᵥ. By calculating these various scores, the driver's skill evaluation for vehicle driving can be made (step S21). The calculated vehicle stability score Sᵥ and turning performance score Tᵥ are outputted to the spare capacity determiner 44.

In response to the inputted vehicle stability score Sᵥ and turning performance score Tᵥ, the spare capacity determiner 44 determines whether the spare capacity is high or low with reference to predetermined threshold values (step S22). That is, the spare capacity is determined by two references of vehicle stability and turning performance. First, the spare capacity is determined based on the vehicle stability (step S23). The spare capacity determiner 44 determines whether the vehicle stability is "high" or "low" with reference to the threshold value set beforehand for the vehicle stability score Sᵥ. When the vehicle stability is determined "low", the spare capacity is determined low.

When the vehicle stability is determined "high", the spare capacity determiner 44 further determines the spare capacity with reference to the turning performance (step S24). The spare capacity determiner 44 determines whether the turning performance is "high" or "low" with reference to the threshold value set beforehand for the turning performance score Tᵥ. When the turning performance is determined "high", the spare capacity is determined high. When the turning performance is determined "low", the spare capacity is determined low. That is, the spare capacity is determined high when the vehicle stability and turning performance are both determined "high". The spare capacity is determined low when the vehicle stability or turning performance is determined "low".

When the spare capacity is determined high, the information presenting device selecting unit 47 instructs the information output unit 50 to output visual information (step S04). The presentation information amount selecting unit 46 instructs the information output unit 50 on the amount of information to be presented when the spare capacity is determined high. When the spare capacity is determined low, the information presenting device selecting unit 47 instructs the information output unit 50 to output nonvisual information (step S05). The presentation information amount selecting unit 46 instructs the information output unit 50 on the amount of information to be presented when the spare capacity is determined low.

As described above, since the spare capacity is determined high only when the vehicle stability score Sᵥ and turning performance score Tᵥ are both high, the amount of information to be presented to the driver and the information device are selected with increased care, and the information load on the driver is lightened.

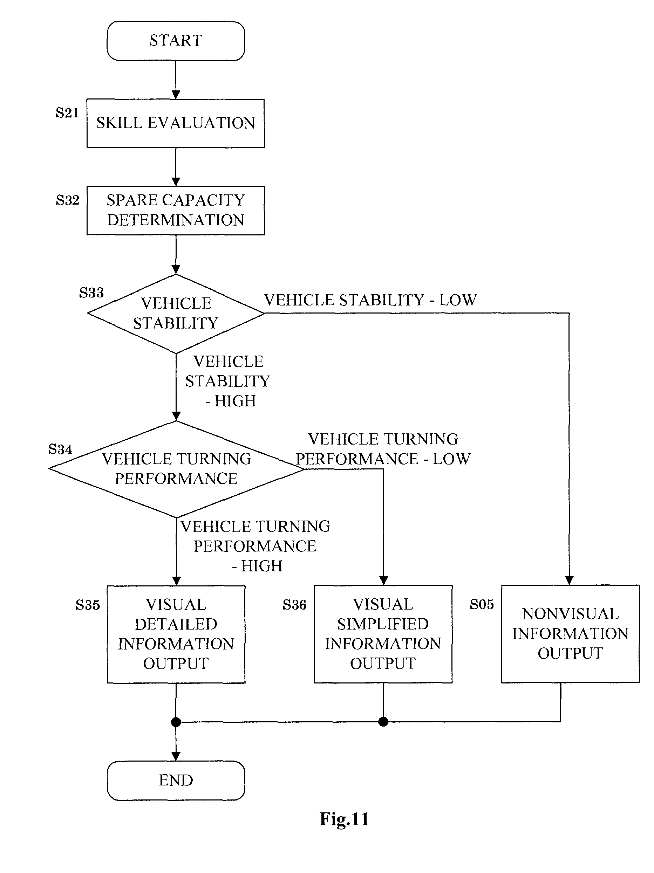

The spare capacity may be determined into three levels using the vehicle stability score Sᵥ and turning performance score Tᵥ. Fig. 11 is a flow chart showing a procedure of information presentation by the vehicle stability score Sᵥ and turning performance score Tᵥ.

Various vehicle state amounts are inputted from the state amount detector 31 to the driving skill information presenting apparatus 30. Based on the inputted vehicle state amounts, the vehicle stability characteristic evaluating unit 54 calculates the vehicle stability score Sᵥ, and the turning characteristic evaluating unit 55 calculates the turning performance score Tᵥ. By calculating these various scores, the driver's skill evaluation for vehicle driving can be made (step S21). The calculated vehicle stability score Sᵥ and turning performance score Tᵥ are outputted to the spare capacity determiner 44.

In response to the inputted vehicle stability score Sᵥ and turning performance score Tᵥ, the spare capacity determiner 44 determines the spare capacity into three levels, ie "high", "medium" or "low", with reference to predetermined threshold values (step S32). That is, the spare capacity is determined into three levels by two references of the vehicle stability and turning performance. First, the spare capacity is determined based on the vehicle stability (step S33). The spare capacity determiner 44 determines whether the vehicle stability is "high" or "low" with reference to the threshold value set beforehand for the vehicle stability score Sᵥ. When the vehicle stability is determined "low", the spare capacity is determined "low".

When the vehicle stability is determined "high", the spare capacity determiner 44 further determines the spare capacity with reference to the turning performance (step S34). The spare capacity determiner 44 determines whether the turning performance is "high" or "low" with reference to the threshold value set beforehand for the turning performance score Tᵥ. When the turning performance is determined "high", the spare capacity is determined "high". When the turning performance is determined "low", the spare capacity is determined "medium". That is, when the vehicle stability and turning performance are both determined "high", the spare capacity is determined "high". When the vehicle stability is determined "high" and the turning performance is determined "low", the spare capacity is determined "medium". When the vehicle stability and turning performance are both determined "low", the spare capacity is determined "low".

When the spare capacity is determined "high", the information presenting device selecting unit 47 instructs the information output unit 50 to output visual information. The presentation information amount selecting unit 46 instructs the information output unit 50 on the amount of detailed information to be presented when the spare capacity is determined "high" (step S35). As visual detailed information, image information having character information and graphic information is presented as shown in Figs. 6 and 7, for example.

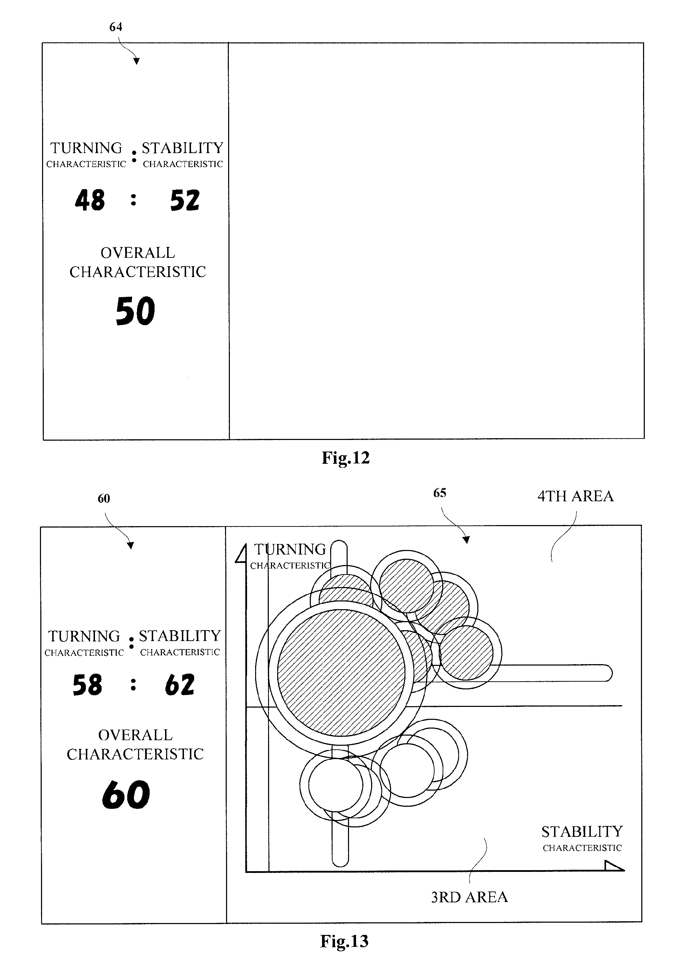

When the spare capacity is determined "high", the presentation area selecting unit 48 displays only areas where the stability characteristic is high among the areas displayed in the graphic information. As shown in Fig. 13, the third area and fourth area where the stability characteristic is high are displayed and the circle representing each plotted score is displayed in enlargement.

When the spare capacity is determined "medium", the information presenting device selecting unit 47 instructs the information output unit 50 to output visual information. The presentation information amount selecting unit 46 instructs the information output unit 50 on an amount of simplified information which should be presented when the spare capacity is determined "medium" (Step S36). As visual simplified information, as shown in Fig. 12, for example, image information which consists of characters without graphic information is presented. The information load is lightened all the more for the omission of graphic information, to allow the driver to concentrate on driving the vehicle.

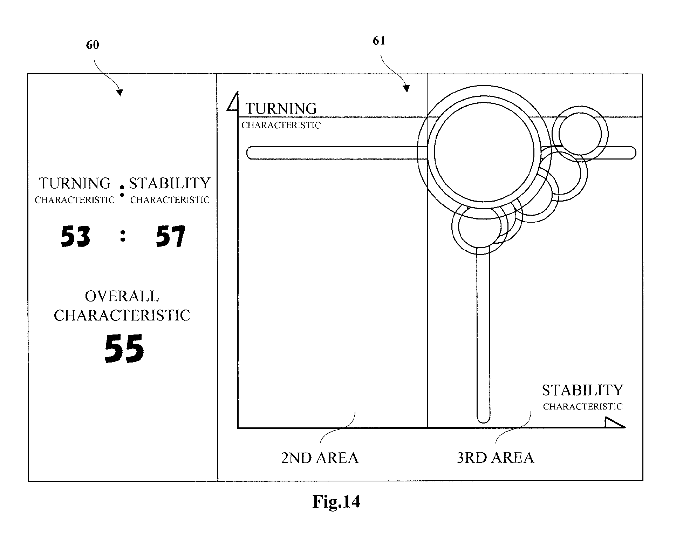

When the spare capacity is determined "medium", the presentation area selecting unit 48 displays only areas where the turning characteristic is low among the areas displayed in the graphic information. As shown in Fig. 14, the second area and third area where the turning characteristic is low are displayed and the circle representing each plotted score is displayed in enlargement.

When the spare capacity is determined "low", the information presenting device selecting unit 47 instructs the information output unit 50 to output nonvisual information. The presentation information amount selecting unit 46 instructs the information output unit 50 on the amount of information to be presented when the spare capacity is determined "low" (step S05). As the nonvisual information, sound information or vibration information is presented as in 4.1.

Although the vehicle stability score Sᵥ and turning performance score Tᵥ are used to determine the spare capacity into three levels, this is not limitative. A three-level determination may be made by using two threshold values with respect to each score. The driver can instruct from the input unit 26 which driving skill is used as reference in determining the spare capacity. The instruction to the input unit 26 is sent to the spare capacity determiner 44.

According to this embodiment, the driver's spare capacity is determined based on his or her driving skill. A presenting device of the information on the driving skill presented to the driver and an amount of presentation information are selected according to this spare capacity. The driver, with skill determination results fed back according to the driver's own spare capacity, can enjoy driving the vehicle at ease. Since the determination of the spare capacity is made to determine levels in a stepwise manner with reference to arbitrary threshold values, a presenting device can be selected with increased appropriateness according to the level of spare capacity. Since the information device and the amount of information presented are changed according to the driver's own spare capacity, information better suited to the driver's skill level can be presented.

When the spare capacity is determined "low", skill information is fed back to the driver in sound information or vibration information which does not impose a visual load. When the spare capacity is determined "high", skill information in a visually large amount of information is fed back. The driver, when skill information is fed back in sound or vibration which is small in the amount of information, will feel unsatisfied. This produces a desire to improve skill and know more detailed information, which leads to motivational leverage for improving skill. On the other hand, when detailed skill information is fed back in image information, the driver, who can know the detailed information at a time when he or she wants to know it, can enjoy improving the driving skill.

This invention is not limited to the foregoing embodiment, but may be modified as follows:
(1) In the foregoing embodiment, the two-wheeled motor vehicle 1 is described as an example of vehicles, but this is not limitative. The driving skill information presenting apparatus may be used on a four-wheeled vehicle.
(2) The state amount detector 31 may acquire detection values representing vehicle states other than yaw angle, yaw rate, roll angle, roll rate, pitch angle, pitch rate, caster angle, steering angle, vehicle speed and position information, or may detect only arbitrary detection values among the above vehicle state amounts.

### Reference Signs List

- 1: two-wheeled motor vehicle
- 30: driving skill information presenting apparatus
- 32: driving skill evaluator
- 44: spare capacity determiner
- 45: presentation information selector
- 46: presentation information amount selecting unit
- 47: information presenting device selecting unit
- 48: presentation area selecting unit
- 50: information output unit
- 54: vehicle stability characteristic evaluating unit
- 55: turning characteristic evaluating unit
- 57: overall characteristic evaluating unit

## Claims

1. A driving skill information presenting apparatus comprising:
a driving skill evaluator for evaluating a driver's driving skill;
a spare capacity determiner for determining the driver's spare capacity for driving based on the driving skill;
a presentation information selector for selecting presentation information on the driving skill based on the spare capacity; and
an information output unit for outputting the presentation information selected.

2. The driving skill information presenting apparatus according to claim 1, wherein the spare capacity determiner determines the spare capacity stepwise according to the driving skill.

3. The driving skill information presenting apparatus according to claim 1 or 2, wherein the presentation information selector includes an output device selecting unit for selecting one of visual information and nonvisual information as the presentation information according to the spare capacity.

4. The driving skill information presenting apparatus according to a claim 3, wherein the presentation information selector includes a presentation area selecting unit for selecting presentation areas for the visual information according to the spare capacity.

5. The driving skill information presenting apparatus according to claim 4, wherein the nonvisual information is one of sound information and vibration information.

6. The driving skill information presenting apparatus according to any one of claims 1 to 5, wherein the presentation information selector includes a presentation information amount selecting unit for selecting an information amount of the presentation information according to the spare capacity.
